(19) Europäisches Patentamt / European Patent Office / Office européen des brevets

(11) EP 2 036 436 B1

(12) EUROPEAN PATENT SPECIFICATION

(45) Date of publication and mention of the grant of the patent: **30.08.2017 Bulletin 2017/35**

(21) Application number: **07768149.2**

(22) Date of filing: **04.07.2007**

(51) Int Cl.: ***A01N 25/30*** *(2006.01)* ***A01N 43/40*** *(2006.01)* ***A01P 3/00*** *(2006.01)*

(86) International application number: **PCT/JP2007/063397**

(87) International publication number: **WO 2008/004596 (10.01.2008 Gazette 2008/02)**

(54) **FUNGICIDAL COMPOSITION AND METHOD FOR CONTROL OF PLANT DISEASE**

FUNGIZIDE ZUSAMMENSETZUNG UND VERFAHREN ZUR BEKÄMPFUNG VON PFLANZENKRANKHEITEN

COMPOSITION FONGICIDE ET PROCÉDÉ POUR LE CONTRÔLE DES MALADIES DES PLANTES

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **05.07.2006 JP 2006185755**

(43) Date of publication of application: **18.03.2009 Bulletin 2009/12**

(73) Proprietor: **ISHIHARA SANGYO KAISHA, LTD.**
**Osaka-shi**
**Osaka 550-0002 (JP)**

(72) Inventors:
- **ISHIHARA, Yoshiaki**
  **Kusatsu-shi**
  **Shiga 525-0025 (JP)**
- **OGAWA, Munekazu**
  **Kusatsu-shi**
  **Shiga 525-0025 (JP)**

(74) Representative: **Hartz, Nikolai**
**Wächtershäuser & Hartz**
**Patentanwaltspartnerschaft mbB**
**Weinstrasse 8**
**80333 München (DE)**

(56) References cited:
**EP-A- 1 559 320**
**WO-A-96/17829**
**WO-A1-2005/041663**
**JP-A- 2002 356 474**
**JP-A- 2002 356 474**

- **'Nu-Film P', [Online] 12 July 2009, USA, pages 1 - 3, XP055192771 Retrieved from the Internet: <URL:http://www.agspec.net/pdfs/labels/Nufilm-P-label.pdf> [retrieved on 2015-06-01]**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### TECHNICAL FIELD

The present invention relates to a method for improving a fungicidal effect to control plant diseases and to a method for improving the vapor effect of 3-(2,3,4-trimethoxy-6-methylbenzoyl)-5-chloro-2-methoxy-4-methylpyridine.

### BACKGROUND ART

Patent Document 1 discloses that a benzoylpyridine derivative which is an active ingredient (a) of the fungicidal composition of the present invention is useful as a fungicide, and Patent Document 2 discloses a fungicidal composition containing the benzoylpyridine derivative and at least one specific fungicide as active ingredients. In these patent documents, it is described that as a case requires, a fungicidal composition may be mixed with various additives and formulated into various formulations for use. However, it is not described that when the benzoylpyridine derivative is used in combination with a specific activity-enhancing ingredient, remarkably excellent fungicidal effect can be obtained. Further, it is not known that the vapor effect (the effect to control pathogenic microbes on leaves with such a trace amount of vaporized active ingredients that humans, animals and environment are not harmed) of the benzoylpyridine derivative is improved by the above specific activity-enhancing ingredient. Further, it is not known that when the composition of the present invention is formulated into a specific formulation, excellent formulation stability can be obtained.

Patent Document 1: WO02/02527
Patent Document 2: WO05/41663 (prior art according to Art. 54(3)EPC)

EP1559320 A discloses 3-benzoyl-2,4,5-substituted pyridine derivatives or their salts, fungicides containing them, and intermediates for producing them.
WO 96/17829 A discloses certain substituted pyridyl phenyl ketones which demonstrate herbicidal activity.

### DISCLOSURE OF THE INVENTION

### PROBLEM TO BE SOLVED BY THE INVENTION

The benzoylpyridine derivative 3-(2,3,4-trimethoxy-6-methylbenzoyl)-5-chloro-2-methoxy-4-methylpyridine may have an inadequate preventive effect against a specific plant disease, its residual effect may last only a relatively short time, or its rainfastness may be weak, and it has only an inadequate controlling effect against plant diseases practically depending upon the application site.
Therefore, it is an object of the present invention to provide a method for controlling plant diseases by using 3-(2,3,4-trimethoxy-6-methylbenzoyl)-5-chloro-2-methoxy-4-methylpyridine.

### MEANS OF SOLVING THE PROBLEMS

The present inventors have conducted a research to solve the above problems and as a result, found that when a benzoylpyridine derivative, which is 3-(2,3,4-trimethoxy-6-methylbenzoyl)-5-chloro-2-methoxy-4-methylpyridine, and a specific activity-enhancing ingredient are used in combination, an unexpectedly excellent fungicidal effect can be obtained as compared with the case where each compound is solely used. Thus, the present invention has been accomplished.
Namely, the present invention relates to the subject matter of claims 1 to 6.
The compound 3-(2,3,4-trimethoxy-6-methylbenzoyl)-5-chloro-2-methoxy-4-methylpyridine may form a salt together with an acidic substance, and it may form, for example, an inorganic acid salt such as a hydrochloride, a hydrobromide, a phosphate, a sulfate or a nitrate; or an organic acid salt such as an acetate, a benzoate, a p-toluenesulfonate, a methanesulfonate or a propanesulfonate.
The compound 3-(2,3,4-trimethoxy-6-methylbenzoyl)-5-chloro-2-methoxy-4-methylpyridine may be prepared by production processes as disclosed in the Patent Documents 1 and 2. Further, it may be produced also by a method in accordance with Journal of Organic Chemistry, 58, 7832 (1993), European Journal of Organic Chemistry, 7, 1371-1376 (2001) or Preparation Examples given hereinafter.
Next, specific examples of the activity-enhancing ingredients will be mentioned. Specific examples are represented by tradename. The ethoxylated aliphatic amine, may, for example, be an ethoxylated tallow amine such as Frigate (manufactured by ISK Biocsience Europe S.A.), Genamin T-150 or Genamin T-200 (manufactured by Clariant), Sorpol 7553 or Sorpol 7409 (manufactured by TOHO Chemical Industry Co., Ltd.), New kalgen D-3615T (manufactured by

TAKEMOTO OIL & FAT CO., LTD.) and Ethomeen T/25 (manufactured by LION AKZO CO., LTD.). The ethoxylated soybean amine may, for example, be Sorpol 7721 (manufactured by TOHO Chemical Industry Co., Ltd.) or New kalgen D-3605 (manufactured by TAKEMOTO OIL & FAT CO., LTD.). The ethoxylated coconut amine may, for example, be Sorpol 7376 6 (manufactured by TOHO Chemical Industry Co., Ltd.), New kalgen D-3110 (manufactured by TAKEMOTO OIL & FAT CO., LTD.) or Ethomeen C/12 (manufactured by LION AKZO CO., LTD.).

The silicone surface active agent may, for example, be a polyoxyethylene methylpolysiloxane such as Makupika (manufactured by Ishihara Sangyo Kaisha, Ltd.), KF-644 (manufactured by Shin-Etsu Chemical Co., Ltd.), SILWET L-77 (manufactured by Toshiba GE Silicone), SLIPPA (manufactured by INTERAGRO).

The citrate ester surface active agent may, for example, be a polyoxyethylene alkyl ether citrate such as Adsee CE 24/19 (manufactured by LION AKZO CO., LTD.) or tradename Adsee CE 8L/22 (manufactured by LION AKZO CO., LTD.).

The sulfate ester surface active agent (including salts of sulfate esters) may, for example, be a polyoxyethylene alkyl ether sulfate ester such as HITENOL LA-12 (manufactured by Dai-ichi Kogyo Seiyaku Co., Ltd.), New Kalgen P-1203S (manufactured by TAKEMOTO OIL & FAT Co., LTd.) or AGNIQUE SLES-270 TL (manufactured by Cognis); a polyoxyethylene alkylphenyl ether sulfate ester such as AGNIQUE SNT-45 (manufactured by Cognis) or Sorpol 5039 (manufactured by TOHO Chemical Industry Co., Ltd.); a polyoxyethylene styrylphenyl ether sulfate ester such as Sorprophor 4D384 (manufactured by Rhodia NICCA), Sorpol 7948 (manufactured by TOHO Chemical Industry Co., Ltd.) or HITENOL NF-08 (manufactured by Dai-ichi Kogyo Seiyaku Co., Ltd.); or a polyoxyethylene polyoxypropylene block polymer sulfate ester such as Sorpol 7933 (manufactured by TOHO Chemical Industry Co., Ltd.).

The phosphate ester surface active agent (including salts of phosphate esters) may, for example, be a polyoxyethylene alkyl ether phosphate ester such as Phosphanol M-220 (manufactured by TOHO Chemical Industry Co., Ltd.), NIKKOL DDP-10 (manufactured by Nikko Chemicals) or AGNIQUE PE 25 (manufactured by Cognis); a polyoxyethylene alkylphenyl ether phosphate ester such as Rhodafa PS/17 (manufactured by Rhodia NICCA); a polyoxyethylene styrylphenyl ether phosphate ester such as Sorprophor FLK-70 (manufactured by Rhodia NICCA), AGNIQUE PE TSP-16T (manufactured by Cognis) or PLYSURF AL (manufactured by Dai-ichi Kogyo Seiyaku Co., Ltd.); or a polyoxyethylene polyoxypropylene block polymer phosphate.

The polyoxyethylene alkyl ether may, for example, be ATLOX MBA 11/8, Synperonic 91/6 (each manufactured by Uniqema) or NOIGEN TDS-70 (manufactured by Dai-ichi Kogyo Seiyaku Co., Ltd.).

The alkyl sulfosuccinate may, for example be a compound represented by the formula (II):

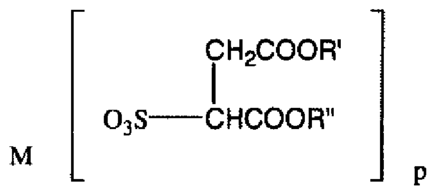

(wherein R' and R" which are independent of each other, is a liner or branch $C_{1-12}$ alkyl group; M is Na, Ca or K, provided that when M is Na or K, p is 1, and when M is Ca, p is 2). Specifically, New Kalgen EP-70G (manufactured by TAKEMOTO OIL & FAT Co., LTd.), AGNIQUE EHS70WE (manufactured by Cognis) or LANKROPOL 4500 (manufactured by LION AKZO CO., LTD.) (dioctyl sulfosuccinate) may, for example, be mentioned.

The alkyl polyglycoside may, for example, be AGNIQUE PG 8105-G, AGNIQUE PG 264-G (each manufactured by Cognis) or AG 6202 (manufactured by LION AKZO CO., LTD.).

## EFFECTS OF THE INVENTION

The fungicidal composition described herein has a stable and high fungicidal activity on crops infected with a plant disease, and by using such a composition, plant disease can be prevented. Further, a vapor effect of the active ingredient (a), which is 3-(2,3,4-trimethoxy-6-methylbenzoyl)-5-chloro-2-methoxy-4-methylpyridine, in the fungicidal composition can be improved, and it is thereby possible to effectively prevent plant diseases on crops, even though the fungicidal composition is sprayed with a small amount of water.

## BRIEF DESCRIPTION OF THE DRAWINGS

Fig. 1 is a plane view showing an arrangement of treated plants after a spray treatment and non-treated plants in a constant temperature chamber.

EXPLANATION OF SYMBOLS

1: Vat, 2: plastic pot, A: treated plants and B: non-treated plants

BEST MODE FOR CARRYING OUT THE INVENTION

The benzoylpyridine derivative used is 3-(2,3,4-trimethoxy-6-methylbenzoyl)-5-chloro-2-methoxy-4-methylpyridine (Compound No. 35).

The fungicidal composition disclosed herein is useful particularly as an agricultural and horticultural fungicide. AS the agricultural and horticultural fungicide, it is effective for controlling diseases such as blast, brown spot or sheath blight of rice (Oryza sativa, etc.); powdery mildew, scab, rust, snow mold, snow blight, loose smut, eye spot, leaf spot or glume blotch of cereals (Hordeum vulgare, Tricum aestivum, etc.); melanose or scab of citrus (Citrus spp., etc.); blossom blight, powdery mildew, Alternaria leaf spot or scab of apple (Malus pumila); scab or black spot of pear (Pyrus serotina, Pyrus ussuriensis, Pyrus communis); brown rot, scab or Phomopsis rot of peach (Prunus persica, etc.); anthracnose, ripe rot, powdery mildew or downy mildew of grape (Vitis vinifera spp., etc.); anthracnose or brown stem rot of Japanese persimmon (Diospyros kaki, etc.); anthracnose, powdery mildew, gummy stem blight or downy mildew of cucurbit (Cucumis melo, etc.); early blight, leaf mold or late blight of tomato (Lycopersicon esculentum); various Alternaria disease pathogens of cruciferous vegetables (Brassica sp., Raphanus sp., etc); late blight or early blight of potato (Solanum tuberasum) ; powdery mildew of strawberry (Fragaria, etc.); and gray mold or disease caused by Sclerotinia of various crops. It is particularly effective against powdery mildew of cereals and vegetables and blast of rice. Further, it is effective also for controlling soil diseases caused by plant pathogens such as Fusarium, Pythium, Rhizoctonia, Verticillium and Plasmodiophora.

The fungicidal composition may be, in the same manner as conventional agricultural chemicals, mixed with various additives and formulated into various formulations such as a dust, granules, water-dispersible granules, a wettable powder, a water-based suspension concentrate, an oil-based suspension concentrate, water soluble granules, an emulsifiable concentrate, a soluble concentrate, a paste, an aerosol and an ultra low-volume formulation. Such additives include solid carriers such as diatomaceous earth, slaked lime, calcium carbonate, talc, white carbon, kaoline, bentonite, a mixture of kaolinite and sericite, clay, sodium carbonate, sodium bicarbonate, mirabilite, zeolite and starch; solvents such as water, alkyl benzene, alkyl naphthalene, paraffin, dimethyl alkylamide, cyclohexane, dimethyl sulfoxide, N-alkyl pyrrolidone ester, ketone, glycol and alcohol; anionic surfactants and spreaders such as a salt of fatty acid, a benzoate, a polycarboxylate, an alkyl sulfate, an alkylaryl sulfate, an alkyl diglycol ether sulfate, a salt of alcohol sulfuric acid ester, an alkyl sulfonate, an alkylaryl sulfonate, an aryl sulfonate, a lignin sulfonate, an alkyldiphenyl ether disulfonate, a polystyrene sulfonate, an alkylaryl phosphate, a styrylaryl phosphate, a salt of polyoxyethylene alkyl ether sulfuric acid, and a salt of a condensate of naphthalene sulfonate with formalin; nonionic surfactants and spreaders such as a sorbitan fatty acid ester, a glycerin fatty acid ester, a fatty acid polyglyceride, a fatty acid alcohol polyglycol ether, acetylene glycol, acetylene alcohol, an oxyalkylene block polymer, a polyoxyethylene alkylaryl ether, a polyoxyethylene styrylaryl ether, a polyoxyethylene glycol alkyl ether, a polyoxyethylene fatty acid ester, a polyoxyethylene sorbitan fatty acid ester, a polyoxyethylene glycerin fatty acid ester, a polyoxyethylene hydrogenated castor oil, and a polyoxypropylene fatty acid ester; and vegetable and mineral oils such as olive oil, kapok oil, castor oil, palm oil, camellia oil, coconut oil, sesame oil, corn oil, rice bran oil, peanut oil, cottonseed oil, soybean oil, rapeseed oil, linseed oil, tung oil, and liquid paraffins. Further, various additives which are commonly used, such as a filler, a thickener, an anti-settling agent, an anti-freezing agent, a dispersion stabilizer, a phytotoxicity reducing agent, and an anti-mold agent, may also be employed. The blend ratio of the active ingredient components to the various additives is usually from 0.005:99.995 to 95:5, preferably from 0.2:99.8 to 90:10. In the actual application of such a formulation, it may be used as it is, or may be diluted to a predetermined concentration with a diluent such as water, and various spreaders may be added thereto, as the case requires.

Among the above various formulations of the composition to be used, when the composition is formulated into a solid formulation such as a dust, granules, water-dispersible granules, a wettable powder or water soluble granules; or a suspension concentrate such as a water-based suspension concentrate or an oil-based suspension concentrate, a formulation to be used is excellent in stability.

In the fungicidal composition, an appropriate weight ratio of the active ingredient 3-(2,3,4-trimethoxy-6-methylbenzoyl)-5-chloro-2-methoxy-4-methylpyridine (a): the activity-enhancing ingredient (b) is usually from 1:5,000 to 2,000:1, preferably from 0.05:99.95 to 90:10, more preferably from 0.2:99.8 to 80:20. On the other hand, from the viewpoint of formulation stability, a weight ratio of the active ingredient (a): the activity-enhancing ingredient (b) to be added is preferably from 5:95 to 90:10. Considering the formulation stability, among the above activity-enhancing ingredient (b), it is preferred to use at least one selected from the group consisting of an ethoxylated aliphatic amine, a silicone surface active agent, a sulfate ester surface active agent, a polyoxyethylene alkyl ether, an alkyl sulfosuccinate and an alkyl polyglycoside.

In a case where the fungicidal composition is used in the form of a suspension, depending on its formulating

weight ratio, the viscosity of the suspension increases, and the composition thereby cannot be formulated, when the activity-enhancing ingredient (b) is added. In order to solve such a problem, as a viscosity reductant, a bivalent alcohol may be used so that a formulation can have a proper viscosity and be stable. The bivalent alcohol may, for example, be ethylene glycol or propylene glycol, and propylene glycol is preferably used. Further, the bivalent alcohol also has an effect as an antifreezing agent. The amount of the bivalent alcohol to be used is preferably from 2 to 50, more preferably from 5 to 30 in a weight ratio to the formulation.

A method for controlling plant diseases, which comprises applying the fungicidal composition to agricultural and horticultural plants, is also disclosed herein. The concentration of the fungicidal composition cannot generally be defined, as it varies depending upon the crop plants to be treated, the application method, the type of the formulation, the dose, etc. However, it is applied in a concentration of the active ingredient 3-(2,3,4-trimethoxy-6-methylbenzoyl)-5-chloro-2-methoxy-4-methylpyridine (a) being usually from 0.1 to 10,000 ppm, preferably from 1 to 2,000 ppm in the case of foliage treatment, and usually from 10 to 100,000 g/ha, preferably from 200 to 20,000 g/ha in the case of soil treatment.

The formulation containing the fungicidal composition or a diluted product thereof may be applied by an application method which is commonly used, such as spreading (spreading, spraying, misting, atomizing, grain diffusing or application on water surface), soil application (such as mixing or irrigation) or surface application (such as coating, dust coating or covering). Further, it may be applied also by so-called ultra low volume.

Further, in addition to 3-(2,3,4-trimethoxy-6-methylbenzoyl)-5-chloro-2-methoxy-4-methylpyridine, the composition may be mixed with or may be used in combination with other agricultural chemicals, fertilizers or phytotoxicity-reducing agents, whereby more excellent effects or activities may sometimes be obtained. Such other agricultural chemicals may, for example, be a herbicide, an insecticide, a miticide, a nematicide, a soil pesticide, a fungicide, an antivirus agent, an attractant, an antibiotic, a plant hormone and a plant growth regulating agent. Especially, with a mixed fungicidal composition having 3-(2,3,4-trimethoxy-6-methylbenzoyl)-5-chloro-2-methoxy-4-methylpyridine mixed with or used in combination with one or more of other fungicidally active ingredient compounds, the application range, the application time, the fungicidal activities, etc. may be improved to preferred directions. Here, the active ingredient 3-(2,3,4-trimethoxy-6-methylbenzoyl)-5-chloro-2-methoxy-4-methylpyridine (a) used in the present invention, and the active ingredient compound of another fungicide may separately be formulated so that they may be mixed for use at the time of application, or they may be formulated together for use. The present disclosure also relates to such a mixed fungicidal composition.

The mixing ratio of 3-(2,3,4-trimethoxy-6-methylbenzoyl)-5-chloro-2-methoxy-4-methylpyridine to another fungicidally active ingredient compound cannot generally be defined, since it varies depending upon the weather conditions, the types of formulations, the crops to be treated, the application time, the application site, the types or germination state of noxious fungi, the types or state of the diseases, etc., but it is usually within a range of from 1:300 to 300:1, preferably from 1:100 to 100:1, by weight. Further, the dose for the application may be such that the total amount of the active compounds is from 0.1 to 50,000 g, preferably from 1 to 30,000 g, per hectare. The present invention discloses a method for controlling noxious fungi by an application of such a mixed fungicidal composition.

The active compounds of insect pest control agents such as insecticides, miticides, nematicides or soil pesticides in the above-mentioned other agricultural chemicals, include, for example, (by common names, some of them are still in an application stage, or test codes) organic phosphate compounds such as profenofos, dichlorvos, fenamiphos, fenitrothion, EPN, diazinon, chlorpyrifos-methyl, acephate, prothiofos, fosthiazate, phosphocarb, cadusafos, dislufoton, chlorpyrifos, demeton-S-methyl, dimethoate, methamidophos, imicyafos, isoxathion, isofenphos, ethion, etrimfos, quinalphos, dimethylvinphos, sulprofos, thiometon, vamidothion, pyraclofos, pyridaphenthion, pirimiphos-methyl, propaphos, phosalone, formothion, malathion, tetrachlovinphos, chlorfenvinphos, cyanophos, trichlorfon, methidathion, phenthoate, ESP, azinphosmethyl, fenthion, heptenophos, methoxychlor, paration, monocrotophos, parathion-methyl, terbufos, phospamidon, phosmet and phorate; carbamate compounds such as carbaryl, propoxur, aldicarb, carbofuran, thiodicarb, methomyl, oxamyl, ethiofencarb, pirimicarb, fenobucarb, carbosulfan, benfuracarb, bendiocarb, furathiocarb, isoprocarb, metolcarb, xylylcarb, XMC and fenothiocarb; nereistoxin derivatives such as cartap, thiocyclam, bensultap and thiosultap-sodium; organic chlorine compounds such as dicofol, tetradifon, endosulufan, dienochlor and dieldrin; organic metal compounds such as fenbutatin Oxide and cyhexatin; pyrethroid compounds such as fenvalerate, permethrin, cypermethrin, deltamethrin, cyhalothrin, tefluthrin, ethofenprox, fenpropathrin, bifenthrin, cyfluthrin, flucythrinate, fluvalinate, cycloprothrin, lambda-cyhalothrin, pyrethrins, esfenvalerate, tetramethrin, resmethrin, protrifenbute, bifenthrin, zeta-cypermethrin, acrinathrin, alpha-cypermethrin, allethrin, gamma-cyhalothrin, theta-cypermethrin, tau-fluvalinate, tralomethrin, profluthrin, beta-cypermethrin, beta-cyfluthrin and metofluthrin; benzoylurea compounds such as diflubenzuron, chlorfluazuron, teflubenzuron, flufenoxuron, lufenuron, novaluron, triflumuron, hexaflumuron, bistrifluron, noviflumuron and fluazuron; juvenile hormone-like compounds such as methoprene, pyriproxyfen, fenoxycarb and diofenolan; Pyridazinone compounds such as pyridaben; pyrazole compounds such as fenpyroximate, fipronil, tebufenpyrad, ethiprole, tolfenpyrad, acetoprole, pyrafluprole and pyriprole; neonicotinoids such as imidacloprid, nitenpyram, acetamiprid, thiacloprid, thiamethoxam, clothianidin, dinotefuran and nithiazine; hydrazine compounds such as tebufenozide, methoxyfenozide, chromafenozide and halofenozide; other compounds such as flonicamid, buprofezin, hexythiazox, amitraz, chlordimeform, silafluofen, triazamate, pymetrozine, pyrimidifen, chlorfenapyr, indoxacarb, acequinocyl, etoxazole, cyromazine, 1,3-dichloropropene, diafenthiuron, benclothiaz, flufenerim, pyridalyl, spirodiclofen, bifenazate, spiromesifen, spirotetramat, propargite, clofentezine, fluacrypyrim, metaflumizone, flubendiamide, cyflumetofen, cyenopyrafen, chlorantraniliprole, pyrifluquinazon, fenazaquin, pyridaben, amidoflumet, chlorobenzoate, sulfluramid, hydramethylnon, metaldehyde and ryanodine. Further, microbial agricultural chemicals such as Bacillus thuringienses aizawai, Bacillus thuringienses kurstaki, Bacillus thuringienses israelensis, Bacillus thuringienses japonensis, Bacillus thuringienses tenebrionis, insecticidal crystal protein produced by Bacillus thuringienses, insect viruses, etomopathogenic fungi, and nematophagous fungi; antibiotics or semisynthetic antibiotics such as avermectin, emamectin-benzoate, milbemectin, spinosad, ivermectin, lepimectin, spinetoram, abamectin and emamectin; natural products such as azadirachtin and rotenone; and repellents such as deet may, for example, be mentioned. By the way, the phrase "still in an application stage" in this paragraph or hereinafter means "before approved by ISO (International organization for standardization)".

The fungicidal active compounds in the above-mentioned other agricultural chemicals include, for example, (by common names, some of them are still in an application stage, or test codes of Japan Plant Protection Association) anilinopyrimidine compounds such as mepanipyrim, pyrimethanil and cyprodinil; pyridinamine compounds such as fluazinam; azole compounds such as triadimefon, bitertanol, triflumizole, etaconazole, propiconazole, penconazole, flusilazole, myclobutanil, cyproconazole, tebuconazole, hexaconazole, furconazole-cis, prochloraz, metconazole, epoxiconazole, tetraconazole, oxpoconazole fumarate, sipconazole, prothioconazole, triadimenol, flutriafol, difenoconazole, fluquinconazole, fenbuconazole, bromuconazole, diniconazole, tricyclazole, probenazole, simeconazole, pefurazoate, ipconazole and imibenconazole; quinoxaline compounds such as quinomethionate; dithiocarbamate compounds such as maneb, zineb, mancozeb, polycarbamate, metiram, propineb and thiram; organic chlorine compounds such as fthalide, chlorothalonil and quintozene; imidazole compounds such as benomyl, thiophanate-methyl, carbendazim, thiabendazole, fuberiazole and cyazofamid; cyanoacetamide compounds such as cymoxanil; phenylamide compounds such as metalaxyl, metalaxyl-M, mefenoxam, oxadixyl, ofurace, benalaxyl, benalaxyl-M (another name: kiralaxyl, chiralaxyl), furalaxyl and cyprofuram; sulfenic acid compounds such as dichlofluanid; copper compounds such as cupric hydroxide and oxine copper; isoxazole compounds such as hymexazol; organophosphorus compounds such as fosetyl-Al, tolcofos-methyl, S-benzyl, O,O-diisopropylphosphorothioate, O-ethyl, S,S-diphenylphosphorodithioate and aluminum ethylhydrogen phosphonate; edifenphos, iprobenfos, N-halogenothioalkyl compounds such as captan, captafol and folpet; dicarboximide compounds such as procymidone, iprodione and vinclozolin; benzanilide compounds such as flutolanil, mepronil, zoxamid and tiadinil; anilide compounds such as carboxin, oxycarboxin, thifluzamide, penthiopyrad and boscalid; piperazine compounds such as triforine; pyridine compounds such as pyrifenox; carbinol compounds such as fenarimol and flutriafol; piperidine compounds such as fenpropidine; morpholine compounds such as fenpropimorph, spiroxamine and tridemorph; organotin compounds such as fentin hydroxide and fentin acetate; urea compounds such as pencycuron; cinnamic acid compounds such as dimethomorph and flumorph; phenylcarbamate compounds such as diethofencarb; cyanopyrrole compounds such as fludioxonil and fenpiclonil; strobilurin compounds such as azoxystrobin, kresoxim-methyl, metominofen, trifloxystrobin, picoxystrobin, oryzastrobin, dimoxystrobin, pyraclostrobin, fluoxastrobin and fluacrypyrin; oxazolidinone compounds such as famoxadone; thiazolecarboxamide compounds such as ethaboxam; silylamide compounds such as silthiopham; aminoacid amidecarbamate compounds such as iprovalicarb and benthiavalicarb-isopropyl; imidazolidine compounds such as fenamidone; hydroxanilide compounds such as fenhexamid; benzenesulfonamide compounds such as flusulfamide; oxime ether compounds such as cyflufenamid; phenoxyamide compounds such as fenoxanil; antibiotics such as validamycin, kasugamycin and polyoxins; guanidine compounds such as iminoctadine; and other compounds such as isoprothiolane, pyroquilon, diclomezine, quinoxyfen, propamocarb hydrochloride, spiroxamine, chloropicrin, dazomet, metam-sodium, nicobifen, metrafenone, UBF-307, diclocymet, proquinazid, amisulbrom (another name: amibromdole), KIF-7767 (KUF-1204, pyribencarb methyl, mepyricarb), Syngenta 446510 (mandipropamid, dipromandamid), fluopicolide, carpropamid, BCF051, BCM061 and BCM062.

Further, agricultural chemicals which may be used in admixture with or in combination with 3-(2,3,4-trimethoxy-6-methylbenzoyl)-5-chloro-2-methoxy-4-methylpyridine, may, for example, be the active ingredient compounds in the herbicides as disclosed in Farm Chemicals Handbook (2002 edition), particularly those of soil treatment type.

EXAMPLES

Now, the present invention will be explained in further detail with reference to Examples.

TEST EXAMPLE 1

500 ppm of the activity-enhancing ingredient (b) was added to a chemical solution containing the active ingredient (a) prepared so as to be from 125 to 150 ppm, and the resulting solution was applied to 1-leaf stage wheat plants cultivated in a plastic pot having a diameter of 9 cm. One day before the above treatment, the wheat plants were dusted and inoculated with conidia of Erysiphe graminis. After the treatment, the wheat plants were maintained in a constant temperature chamber for 3 to 5 days. Then, conidia of Erysiphe graminis were dusted and inoculated again. From 7

days after the inoculation, the disease rate of each spot was measured by visual observation, the disease rate was compared to non-treated plants, and the preventive effect value was calculated. The preventive effect value was obtained by the following formula.

The preventive effect value = (the disease rate of each plant/ the disease rate in non-treated area) × 100

By carrying out the test in the above manner, the following result was obtained. When at least one selected from the group consisting of compound No. 35, and comparative compounds Nos. 39 (4-(2,3,4-trimethoxy-6-methylbenzoyl)-2,5-dichloro-3-trifluoromethylpyridine) and 40 (4-(2,3,4-trimethoxy-6-methylbenzoyl)-2-chloro-3-trifluoromethyl-5-methoxypyridine)as the ingredient component (a) and at least one selected from the group consisting of Frigate, KF-644, Adsee CE 24/19, hightenol LA-12, ATROX MBA11/8, Synperonic 91/6, LANKROPOL 4500 and AGNIQUE PG 8105-G were used, at least 99 of the preventive effect value was obtained. Further, in a case where the activity-enhancing ingredient (b) was not used, the preventive effect value was about 80.

TEST EXAMPLE 2

1-Leaf stage wheat plants cultivated in a plastic pot having a diameter of 9 cm were dusted and inoculated with conidia of erysiphe graminis. Next day, a chemical solution containing a predetermined concentration of the active ingredient (a) and a predetermined concentration of the activity-enhancing ingredient (b) was applied in an amount of 200L/ha to "treated plants". On the other hand, plants which were not treated were "non-treated plants". Treated plants were dried by air, and as shown in Fig. 1, plastic pots 2 were placed in vat 1, a non-treated wheat plant was placed at a center for examining a vapor effect, and the vat was left in a constant temperature chamber. After 3 days, conidia of erysiphe graminis were dusted and inoculated over the vat. After the inoculation, the vat was left in a constant temperature chamber. From 6 days after the inoculation, the disease rate of each pot was measured by visual observation, the disease rate was compared to non-treated plants, and the preventive effect value was calculated. The preventive effect value was obtained by the following formula.

the preventive effect value = (the disease rate of each plant/ the disease rate in non-treated area) × 100

The direct treatment effect is shown by the average preventive effect value of plants (8 plants) treated with the chemical solution. Further, the vapor effect is shown by the preventive effect value of the plant placed at the center.

The used activity-enhancing ingredients are shown in Table 1., and the results of the tests are shown in Tables 2 to 4.

TABLE 1

| Tradename | Composition | Type |
|---|---|---|
| Frigate | Tallow-amine ethoxylate (15 mol), | Ethoxylated aliphatic amine |
| KF-644 | Polyether modified silicone | Silicone surface active agent(polyoxyethylene methyl polysiloxane) |
| Adsee CE24/19 | C12-14 polyoxyethylene alkylether citrate | Citrate ester surface active agent (polyoxyethylene alkylether citrate) |
| HITENOL LA-12 | Polyoxyethylene (6 mol) sodium lauryl ether sulfate | Sulfate ester surface active agent (polyoxyethylene alkylether sulfate) |
| Phosphanol ML-220 | Polyoxyethylene (3 mol) alkyl (C13) ether phosphoric acid monoester | Phosphate ester surface active agent (polyoxyethylene alkylether phosphate) |
| ATLOX MBA 11/8 | Branch C11 alcohol ethoxylate | Polyoxyethylene alkyl ether |
| Synperonic 91/6 | Alcohol ethoxylate | Polyoxyethylene alkyl ether |

(continued)

| Tradename | Composition | Type |
|---|---|---|
| LANKROPOL 4500 | Dioctyl sulfosuccinate | Alkyl sulfosuccinate |
| AGNIQUE PG8105-G | C8-C10 alkylpolyglycoside, degree of polymerization: 1.5 | Alkyl polyglycoside |

TABLE 2

| 150 ppm of compound No. 35 was used as the active ingredient (a), and 500 ppm of the activity-enhancing ingredient (b) was used | | |
|---|---|---|
| Type of the activity-enhancing ingredient (b) (Tradename) | Preventive value | |
| | Direct treatment effect | Vapor effect |
| Frigate | 99.4 | 70 |
| KF-644 | 99.4 | 90 |
| Adsee CE24/19 | 99.4 | 95 |
| HITENOL LA-12 | 100 | 95 |
| Phosphanol ML-220 | 97.5 | 80 |
| ATLOX MBA 11/8 | 100 | 95 |
| Synperonic 91/6 | 100 | 95 |
| LANKROPOL 4500 | 99.4 | 100 |
| AGNIQUE PG8105-G | 100 | 90 |
| Non | 83.8 | 30 |

TABLE 3 (Comparative)

| 150 ppm of compound No. 39 was used as the active ingredient (a), and 500 ppm of the activity-enhancing ingredient (b) was used | | |
|---|---|---|
| Type of the activity-enhancing ingredient (b) (Tradename) | Preventive value | |
| | Direct treatment effect | Vapor effect |
| Frigate | 100 | 90 |
| KF-644 | 86.9 | 80 |
| Adsee CE24/19 | 99.4 | 100 |
| HITENOL LA-12 | 96.3 | 90 |
| Phosphanol ML-220 | 98.1 | 100 |
| ATLOX MBA 11/8 | 98.8 | 100 |
| Synperonic 91/6 | 96.9 | 80 |
| LANKROPOL 4500 | 99.4 | 95 |
| AGNIQUE PG8105-G | 97.5 | 100 |
| Non | 83.1 | 40 |

TABLE 4 (Comparative)

| 150 ppm of compound No. 40 was used as the active ingredient (a), and 500 ppm of the activity-enhancing ingredient (b) was used | | |
|---|---|---|
| Type of the activity-enhancing ingredient (b) (Tradename) | Preventive value | |
| | Direct treatment effect | Vapor effect |
| Frigate | 93.1 | 0 |
| KF-644 | 100 | 50 |
| Adsee CE24/19 | 95.6 | 30 |
| HITENOL LA-12 | 98.8 | 20 |
| Phosphanol ML-220 | 100 | 60 |
| ATLOX MBA 11/8 | 98.1 | 40 |
| Synperonic 91/6 | 98.8 | 20 |
| LANKROPOL 4500 | 100 | 80 |
| AGNIQUE PG8105-G | 96.9 | 10 |
| Non | 70.6 | 10 |

FORMULATION EXAMPLE 1

(1) Active ingredient (a) 28.1 parts by weight
(2) Dispersant, Morwet D-425 (trade name, manufactured by LION AKZO CO., LTD.)
1.8 parts by weight
(3) Dispersant, SANX C (trade name, manufactured by Nippon Paper Chemicals Co., Ltd.) 1.8 parts by weight
(4) Dipersant Tersperse 2500 (trade name, manufactured by HUNTSMAN) 4.4 parts by weight
(5) Antifoaming agent, Rhodorsill 432 (trade name, manufactured by Rhodia NICCA) 0.4 part by weight
(6) Antifreezing agent, propylene glycol 4.4 parts by weight
(7) Dipersant/suspension, Veegum R (trade name, manufactured by Sanyo chemical Industries, Ltd.)
0.3 part by weight
(8) Thickener, Rhodopol 23 (trade name, manufactured by Rhodia NICCA) 0.1 part by weight
(9) Anti-mold agent, Proxel GXL (trade name, Avesia)
0.1 part by weight
(10) Water 58.6 parts by weight

The above (1) to (7) and (10) were mixed, and the mixture was wet-pulverized so that the average particle size of the active ingredient (a) became 2 $\mu$m. Then, (8) and (9) were added, and the mixture was stirred to obtain a suspension. 10 parts by weight of activity-enhancing ingredient (b) was added to 90 parts by weigh of the suspension and mixed to obtain an aqueous suspension product.

FORMULATION EXAMPLE 2

(1) Active ingredient (a) 25.3 parts by weight
(2) Dispersant, Morwet D-425 1.6 parts by weight
(3) Dispersant, SANX C 1.6 parts by weight
(4) Dipersant Tersperse 2500 4 parts by weight
(5) Antifoaming agent, Rhodorsill 432 0.4 part by weight
(6) Antifreezing agent, propylene glycol 4 parts by weight
(7) Dipersant/suspension, Veegum R 0.3 part by weight
(8) Thickener, Rhodopol 23 0.1 part by weight

(9) Anti-mold agent, Proxel GXL 0.1 part by weight
(10) Water 52.6 parts by weight
(11) The activity-enhancing ingredient (b)
10 parts by weight

The above (1) to (7) and (10) were mixed, and the mixture was wet-pulverized so that the average particle size of the active ingredient (a) became 2 μm. Then, (8), (9) and (11) were added, and the mixture was stirred to obtain an aqueous suspension product.

FORMULATION EXAMPLE 3 TO 7

Respective components shown in Table 5 were blended and wet-pulverized so that the average particle size of the active ingredient (a) became 1 μm to obtain an aqueous suspension product.

TABLE 5

| Formulation example / Components in formulation | Blend amounts of respective components in each Formulation Example (part by weight) | | | | |
|---|---|---|---|---|---|
| | 3 | 4 | 5 | 6 | 7 |
| Active ingredient (a) | 18.1 | 18.1 | 17.7 | 17.7 | 5.2 |
| Soprophor FLK/70 | 2.8 | 2.8 | 2.8 | 2.8 | 3.0 |
| Morwet D-425 | 2.8 | 2.8 | 2.8 | 2.8 | 3.0 |
| Antifoaming agent, Rhodorsil 432 | 0.5 | 0.5 | 0.5 | 0.5 | 0.5 |
| Activity-enhancing ingredient (b) | 8.3 | 8.3 | 8.3 | 8.3 | 74.6 |
| Rhodopol 23 | 0.1 | 0.1 | 0.1 | 0.1 | 0 |
| Proxel GXL | 0.1 | 0.1 | 0.1 | 0.1 | 0 |
| Propylene glycol | 9.3 | 18.6 | 18.6 | 23.3 | 10 |
| Water | 58.0 | 48.7 | 49.1 | 44.4 | 3.7 |

COMPARATIVE EXAMPLE

An aqueous suspension was tried to prepare in the same manner as in Formulation Examples 3 to 7 by using 5.2 parts by weight of the active ingredient (a), 3.0 parts by weight of Soprophor FLK/70, 3.0 parts by weight of Morwet D-425, 0.5 part by weight of anti-foaming agent, Rhodorsil 432, 74.6 parts by weight of the activity-enhancing ingredient (b) and 13.7 parts by weight of water. However, the mixture was solidified and could not be formulated.

FORMULATION TEST EXAMPLE 1

In a case where in Formulation Test Example 3, compound No. 35 and comparative compounds Nos. 39 and 40 were used as the active ingredient (a), and nine types of the activity-enhancing ingredients shown in Table 1 in Test Example 2 were used as the activity-enhancing ingredient (b), the viscosity was about 800 mPa·S.

FORMULATION TEST EXAMPLE 2

In a case where in Formulation Test Examples 4 or 5, compound No. 35 and comparative compounds Nos. 39 and 40 were used as the active ingredient (a), and nine types of the activity-enhancing ingredients shown in Table 1 in Test Example 2 were used as the activity-enhancing ingredient (b), the viscosity was about 350 mPa·S.

FORMULATION TEST EXAMPLE 3

In a case where in Formulation Test Example 6, compound No. 35 and comparative compounds Nos. 39 and 40 were used as the active ingredient (a), and nine types of the activity-enhancing ingredients shown in Table 1 in Test

Example 2 were used as the activity-enhancing ingredient (b), the viscosity was about 150 mPa·S.

FORMULATION TEST EXAMPLE 4

In a case where in Formulation Test Example 7, compound No. 35 and comparative compounds Nos. 39 and 40 were used as the active ingredient (a), and nine types of the activity-enhancing ingredients shown in Table 1 in Test Example 2 were used as the activity-enhancing ingredient (b), the viscosity was about 100 mPa·S.

INDUSTRIAL APPLICABILITY

The fungicidal composition of the present invention has a stable and high preventive effect on crops infected with a plant disease, and it is possible to prevent plant diseases.

## Claims

1. A method for improving a fungicidal effect to control plant diseases of 3-(2,3,4-trimethoxy-6-methylbenzoyl)-5-chloro-2-methoxy-4-methylpyridine by adding at least one activity-enhancing ingredient selected from the group consisting of an ethoxylated aliphatic amine, a silicone surface active agent, a citrate ester surface active agent, a sulfate ester surface active agent, a phosphate ester surface active agent, a polyoxyethylene alkyl ether, an alkyl sulfosuccinate, and an alkyl polyglycoside.

2. A method for improving the vapor effect of 3-(2,3,4-trimethoxy-6-methylbenzoyl)-5-chloro-2-methoxy-4-methylpyridine by adding at least one activity-enhancing ingredient selected from the group consisting of an ethoxylated aliphatic amine, a silicone surface active agent, a citrate ester surface active agent, a sulfate ester surface active agent, a phosphate ester surface active agent, a polyoxyethylene alkyl ether, an alkyl sulfosuccinate, and an alkyl polyglycoside.

3. The method according to Claim 1 or 2, wherein the mixing weight ratio of 3-(2,3,4-trimethoxy-6-methylbenzoyl)-5-chloro-2-methoxy-4-methylpyridine (a) to the activity-enhancing ingredient (b) is from 1:5,000 to 2,000:1.

4. The method according to any one of Claims 1 to 3, wherein the mixture of the 3-(2,3,4-trimethoxy-6-methylbenzoyl)-5-chloro-2-methoxy-4-methylpyridine (a) and the activity-enhancing ingredient (b) is in the form of a solid formulation.

5. The method according to any one of Claims 1 to 3, wherein the mixture of the 3-(2,3,4-trimethoxy-6-methylbenzoyl)-5-chloro-2-methoxy-4-methylpyridine (a) and the activity-enhancing ingredient (b) is in the form of a suspension formulation.

6. The method according to Claim 5, wherein a bivalent alcohol is used as a viscosity reductant.

## Patentansprüche

1. Verfahren zur Verbesserung der fungiziden Wirkung von 3-(2,3,4-Trimethoxy-fimethylbenzoyl)-5-chlor-2-methoxy-4-methylpyridin, um Pflanzenerkrankungen zu bekämpfen, durch die Zugabe wenigstens eines wirkungsverstärkenden Inhaltsstoffs, ausgewählt aus der Gruppe, bestehend aus einem ethoxylierten aliphatischen Amin, einem Silikon-Tensid, einem Citratester-Tensid, einem Sulfatester-Tensid, einem Phosphatester-Tensid, einem Polyoxyethylenaikylether, einem Alkylsulfosuccinat und einem Alkylpolyglycosid.

2. Verfahren zur Verbesserung der Dampfwirkung von 3-(2,3,4-Trimethoxy-6-methylbenzoyl)-5-chlor-2-methoxy-4-methylpyridin durch die Zugabe wenigstens eines wirkungsverstärkenden Inhaltsstoffs, ausgewählt aus der Gruppe, bestehend aus einem ethoxylierten aliphatischen Amin, einem Silikon-Tensid, einem Citratester-Tensid, einem Sulfatester-Tensid, einem Phosphatester-Tensid, einem Polyoxyethylenalkylether, einem Alkylsuffosuccinat und einem Alkylpolyglycosid.

3. Verfahren nach Anspruch 1 oder 2, wobei das Gewichtsverhältnis der Mischung von 3-(2,3,4-Trimethoxy-6-methylbenzoyl)-5-chlor-2-methoxy-4-methylpyridin (a) zu dem wirkungsverstärkenden Inhaltsstoff (b) von 1:5.000 bis 2.000:1 beträgt.

4. Verfahren nach einem der Ansprüche 1 bis 3, wobei die Mischung von 3-(2,3,4-Trimethoxy-6-methylbenzoyl)-5-chlor-2-methoxy-4-methylpyridin (a) und dem wirkungsverstärkenden Inhaltsstoff (b) in Form einer festen Formulierung vorliegt.

5. Verfahren nach einem der Ansprüche 1 bis 3, wobei die Mischung von 3-(2,3,4-Trimethoxy-6-methylbenzoyl)-5-chlor-2-methoxy-4-methylpyridin (a) und dem wirkungsverstärkenden Inhaltsstoff (b) in Form einer Suspensionsformulierung vorliegt.

6. Verfahren nach Anspruch 5, wobei ein zweiwertiger Alkohol als Mittel zur Verringerung der Viskosität verwendet wird.

## Revendications

1. Procédé pour améliorer un effet fongicide, servant à lutter contre des maladies des plantes, de la 3-(2,3,4-triméthoxy-6-méthylbenzoyl)-5-chloro-2-méthoxy-4-méthylpyridine, par addition d'au moins un ingrédient amplifiant l'activité choisi dans l'ensemble constitué par une amine aliphatique éthoxylée, un agent tensioactif siliconé, un agent tensioactif de type ester citrate, un agent tensioactif de type ester sulfate, un agent tensioactif de type ester phosphate, un alkyléther polyoxyéthyléné, un alkylsulfosuccinate, et un alkylpolyglycoside.

2. Procédé pour améliorer l'effet de vapeur de la 3-(2,3,4-triméthoxy-6-méthylbenzoyl)-5-chloro-2-méthoxy-4-méthylpyridine, par addition d'au moins un ingrédient amplifiant l'activité choisi dans l'ensemble constitué par une amine aliphatique éthoxylée, un agent tensioactif siliconé, un agent tensioactif de type ester citrate, un agent tensioactif de type ester sulfate, un agent tensioactif de type ester phosphate, un alkyléther polyoxyéthyléné, un alkylsulfosuccinate, et un alkylpolyglycoside.

3. Procédé selon la revendication 1 ou 2, dans lequel le rapport de mélange en poids de la 3-(2,3,4-triméthoxy-6-méthylbenzoyl)-5-chloro-2-méthoxy-4-méthylpyridine (a) sur l'ingrédient amplifiant l'activité (b) est de 1/5000 à 2000/1.

4. Procédé selon l'une quelconque des revendications 1 à 3, dans lequel le mélange de la 3-(2,3,4-triméthoxy-6-méthylbenzoyl)-5-chloro-2-méthoxy-4-méthylpyridine (a) et de l'ingrédient amplifiant l'activité (b) est sous la forme d'une formulation solide.

5. Procédé selon l'une quelconque des revendications 1 à 3, dans lequel le mélange de la 3-(2,3,4-triméthoxy-6-méthylbenzoyl)-5-chloro-2-méthoxy-4-méthylpyridine (a) et de l'ingrédient amplifiant l'activité (b) est sous la forme d'une formulation en suspension.

6. Procédé selon la revendication 5, dans lequel un alcool divalent est utilisé en tant que réducteur de viscosité.

Fig. 1

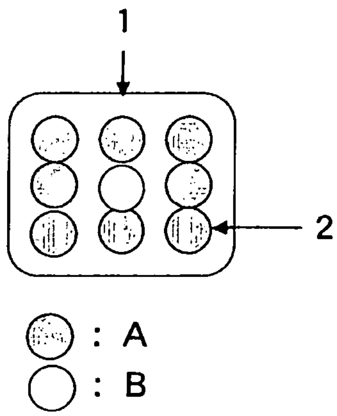

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 0202527 A
- WO 0541663 A
- EP 1559320 A
- WO 9617829 A


### Non-patent literature cited in the description


- *Journal of Organic Chemistry,* 1993, vol. 58, 7832
- *European Journal of Organic Chemistry,* 2001, vol. 7, 1371-1376